# FASCICULE DE BREVET EUROPEEN

(11) **EP 2 448 804 B1**
(45) Date de publication et mention de la délivrance du brevet: **09.09.2015**
(21) Numéro de dépôt: 10745353.2
(22) Date de dépôt: 28.06.2010
(51) Int. Cl.: B62D 1/184, B62D 1/181

(54) **SYSTÈME DE VERROUILLAGE ÉLECTRIQUE D'UNE COLONNE DE DIRECTION ET COLONNE DE DIRECTION COMPRENANT UN TEL SYSTÈME DE VERROUILLAGE**
SYSTEM ZUR ELEKTRISCHEN SPERRE EINER LENKSÄULE UND LENKSÄULE MIT EINEM SOLCHEN SPERRSYSTEM
SYSTEM FOR ELECTRICALLY LOCKING A STEERING COLUMN, AND STEERING COLUMN INCLUDING SUCH A LOCKING SYSTEM

(30) Priorité: 30.06.2009 FR 0903193
(43) Date de publication de la demande: 09.05.2012
(73) Titulaire: Robert Bosch Automotive Steering Vendôme, 41100 Vendome (FR)
(72) Inventeur: BERTET, Nicolas, F-37100 Tours (FR); EYMERY, Vincent, F-41310 Lancé (FR); SARANDAO, Alexandre, F-41100 Villerable (FR)
(74) Mandataire: Novagraaf Technologies
(86) Numéro de dépôt international: PCT/FR2010/051338
(87) Numéro de publication internationale: WO 2011/001092

(56) Documents cités:
- EP-A- 1 375 296
- EP-A- 1 714 849
- WO-A-2005/005230
- US-A1- 2006 005 658

## Description

L'invention concerne un système de verrouillage électrique de la position d'une colonne de direction d'un véhicule par rapport au tableau de bord du véhicule.

Le système de verrouillage électrique selon l'invention s'applique à une colonne de direction réglable manuellement soit en profondeur et en hauteur, soit en profondeur ou en hauteur. La colonne de direction comporte un arbre de direction monté dans un tube-corps mobile, le tube-corps étant raccordé à un ensemble support destiné à être fixé au châssis du véhicule ou à un élément de la carrosserie.

La mise en oeuvre de systèmes de verrouillage électrique sur des colonnes de direction réglable est connue en soi. A titre d'exemple, citons la demande internationale WO2008/152253 et la demande de brevet européenne EP1531111. Les systèmes décrits dans ces demandes présentent cependant l'inconvénient d'imposer l'utilisation d'une électronique de commande de la colonne de direction spécifique à intégrer dans un calculateur véhicule. Son intégration impose ou bien une modification du calculateur existant si les ressources et les interfaces de celui-ci le permettent, ou bien le développement d'un calculateur spécifique. Par ailleurs, l'intégration de l'électronique de commande nécessite l'implémentation d'un faisceau de câbles supplémentaires entre le calculateur associé et le système de verrouillage, générant de ce fait des problèmes d'intégration, de coût, de poids et de sécurité de fonctionnement du système de verrouillage.

Un autre type de systèmes de verrouillage électrique est décrit dans la demande de brevet EP1375296. Cette demande a pour objet un mécanisme de colonne de direction à commande électrique comprenant des moyens de verrouillage du tube-corps sur l'ensemble support couplé à un moteur électrique. Le moteur électrique est agencé pour entraîner les moyens de verrouillage dans une position plaçant la colonne de direction dans un état verrouillé ou dans un état déverrouillé. Le mécanisme est agencé pour permettre, une fois la colonne de direction disposée dans l'état déverrouillé, le réglage de la colonne de direction sans assistance du moteur électrique.

Le mécanisme de la demande EP1375296, tel que prévu, présente cependant l'inconvénient de ne pas permettre de détecter automatiquement l'état de la colonne suite à un actionnement spécifique des moyens de commande du moteur électrique et par conséquent de générer les actions adéquates au bon déverrouillage ou verrouillage de la colonne selon la commande effectuée. Ainsi, lorsqu'il est constaté par le conducteur que la colonne de direction n'est pas suffisamment déverrouillée ou verrouillée, celui-ci doit procéder lui-même à de nouvelles manoeuvres pour placer la colonne de direction dans l'état souhaité. De telles manoeuvres s'avèrent en outre particulièrement dangereuses lorsque l'insuffisance du verrouillage de la colonne de direction est constatée par le conducteur alors que le véhicule est en mouvement.

Le document EP 171489-A2 décrit de*s* moyens de detection selon le préambule des revendications 1 et 7.

L'invention vise à remédier aux problèmes de l'art antérieur précédemment mentionné en proposant un système de verrouillage électrique permettant de détecter l'état de la colonne de direction de manière à générer les actions adéquates pour parvenir à l'état commandé (état verrouillé ou état déverrouillé).

L'invention a également pour but de proposer un système de verrouillage électrique compact et d'implémentation aisée sur la colonne de direction.

A cet effet, et selon un premier aspect, l'invention propose un système selon la revendication 1.

La présence de moyens de détection permet ainsi de détecter l'état effectif de la colonne de direction obtenu en réponse à une consigne d'activation délivrée par les moyens de commande. En d'autres termes, les moyens de détection permettent de déterminer si la colonne de direction est bien placée dans l'état attendu de déverrouillage ou de verrouillage. Dans le cas contraire, en fonction du signal électrique émis représentatif de l'état détecté par les moyens de détection, le système génère des consignes d'activation du moteur électrique pour placer la colonne dans l'état verrouillé ou déverrouillé commandé.

Avantageusement, le système de verrouillage comporte une unité de commande reliée aux moyens de commande pour alimenter le moteur électrique en réponse aux consignes d'activation.

Avantageusement, l'unité de commande est reliée aux moyens de détection pour émettre une alarme en fonction du signal électrique représentatif de l'état de la colonne de direction et des consignes d'activation.

Avantageusement, l'unité de commande est portée par le moteur électrique. Cela offre ainsi un système de verrouillage autonome, pouvant remplacer en lieu et place d'un levier de serrage manuel et le dispositif de serrage associé.

Avantageusement, les moyens de détection comprennent un capteur et un codeur ménagé sur le moteur électrique couplé à un capteur de manière à détecter le nombre de tours effectué par le moteur électrique.

Avantageusement, le capteur est ménagé sur l'unité de commande. Cela permet ainsi de supprimer toute liaison filaire entre le moteur électrique et l'unité de commande, favorisant ainsi la compacité du système de verrouillage mais également améliorant la sécurité du fonctionnement de l'unité de commande.

Avantageusement, le capteur et le codeur sont respectivement un capteur de champ magnétique et un codeur magnétique, le codeur magnétique présentant au moins une paire de pôles solidaire du moteur électrique.

De préférence, le système de verrouillage comporte des moyens de détection de la non-exécution des consignes d'activation par le moteur électrique. Avantageusement, les moyens de détection de la non-exécution des consignes d'activation sont couplés à des moyens d'alerte délivrant un signal sonore et/ou visuel.

Avantageusement, les moyens de commande sont positionnés au niveau d'un volant de direction, de sorte à rendre plus aisé sa manipulation pour le conducteur du véhicule et ainsi minimiser toute manoeuvre dangereuse de la part de ce dernier.

Dans un mode de réalisation particulièrement avantageux, il peut être prévu que le système de verrouillage comporte des moyens pour informer automatiquement un utilisateur, directement ou par l'intermédiaire d'un calculateur, de l'état de la colonne de direction. Cela permet ainsi d'assurer au conducteur que l'état commandé de déverrouillage ou verrouillage est atteint.

L'invention concerne également une colonne de direction comprenant un ensemble support destiné à être fixé sur un châssis de véhicule et un tube-corps monté mobile dans l'ensemble support pour permettre un ajustement manuel de la position du tube-corps par rapport à l'ensemble support, ladite colonne comprenant un système de verrouillage tel que décrit précédemment.

Selon un autre aspect, l'invention propose un procédé selon la revendication 11.

Il peut être alors prévu avantageusement de générer, en fonction du signal émis, des consignes d'activation du moteur électrique de manière à placer la colonne dans l'état verrouillé ou déverrouillé commandé.

Selon un mode de réalisation particulièrement avantageux, le procédé d'ajustement comprend une étape préalable de vérification de l'existence de paramètres de calibration en mémoire dans une unité de commande du moteur électrique.

Avantageusement, il peut être prévu de procéder, lorsque l'existence de paramètres de calibration n'est pas vérifiée, à une étape de calibration du moteur électrique, l'étape de calibration consistant à déterminer et mettre en mémoire dans l'unité de commande des données spécifiques au passage d'un état déverrouillé à un état verrouillé de la colonne de direction, et inversement.

Avantageusement, les données spécifiques comprennent le nombre de tours suivant un sens donné à effectuer par le moteur électrique par rapport à une position de référence pour atteindre une position déterminée correspondant à l'état déverrouillé et/ou l'état verrouillé de la colonne de direction.

Avantageusement, la position du moteur électrique caractérisant le déverrouillage de la colonne de direction est déterminée à partir d'une position de blocage mécanique de fin de course du moteur électrique en rotation dans le sens correspondant au déverrouillage de la colonne de direction et du nombre de tours effectués par le moteur. Par « position du moteur électrique », on entend le nombre de tours effectué par l'axe rotatif dudit moteur.

Avantageusement, le moteur électrique est arrêté automatiquement lorsqu'il atteint la position caractérisant l'état déverrouillé et/ou l'état verrouillé de la colonne de direction.

Avantageusement, il peut être prévu une étape de verrouillage automatique de la colonne de direction par l'unité de commande lorsque la durée du maintien de la colonne de direction dans l'état déverrouillé dépasse un seul limite de durée de maintien déterminé.

D'autres objets et avantages de l'invention apparaîtront au cours de la description qui suit, faite en référence aux dessins annexés, dans lesquels :
- la figure 1 représente une vue schématique d'une colonne de direction équipée d'un système de verrouillage électrique de la position de ladite colonne selon l'invention ;
- la figure 2 représente une vue éclatée du système de verrouillage électrique de la figure 1 ;
- la figure 3 représente une vue de détail du système de verrouillage électrique de la figure 2 ;
- la figure 4 représente un schéma synoptique de l'unité de traitement du système de verrouillage électrique de la figure 2 ;
- les figures 5a, 5b, 5c, 5d représentent un schéma synoptique du système de verrouillage électrique selon quatre configurations de l'invention ;
- la figure 6 représente un organigramme relatif à l'opération de réglage de la colonne de direction ;
- la figure 7 représente un organigramme relatif à l'opération de calibration de la colonne de direction ;
- la figure 8 représente un organigramme relatif à la procédure de gestion du dents sur dents de réglage dans le cas d'une colonne de direction à crémaillère.

Pour plus de clarté, les éléments identiques ou similaires des différents modes de réalisation sont repérés par des signes de référence identiques sur l'ensemble des figures.

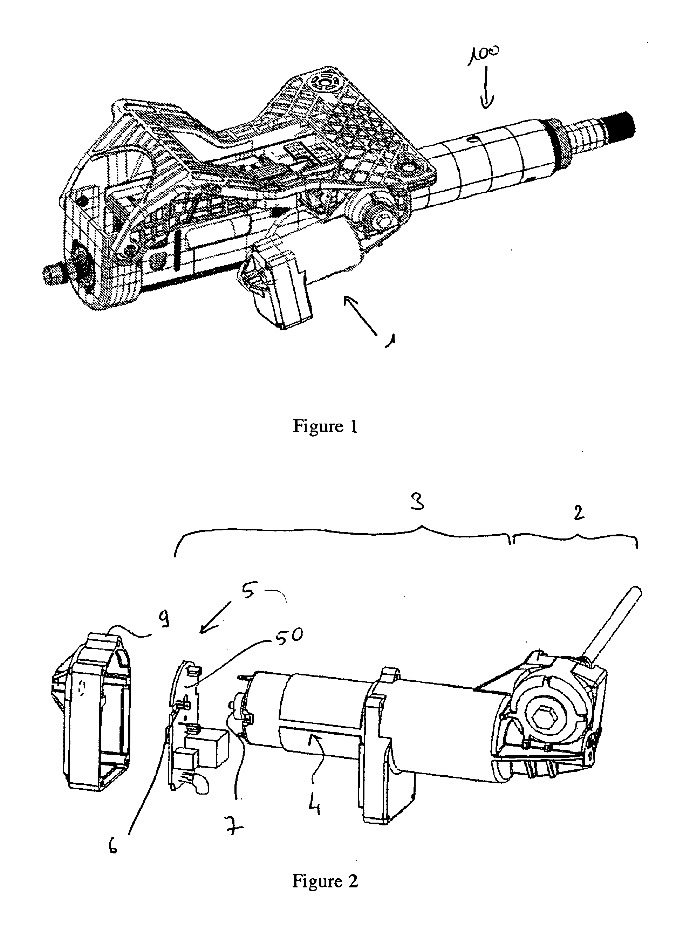

En relation avec les figures 1 à 3, il est décrit un système de verrouillage électrique 1 de la position d'une colonne de direction 100 d'un véhicule par rapport au tableau de bord de ce véhicule. La colonne de direction 100 comprend un ensemble support destiné à être fixé sur un châssis de véhicule et un tube-corps monté mobile dans l'ensemble support de façon à permettre l'ajustement manuel en hauteur et/ou profondeur de la colonne de direction 100.

Le système de verrouillage 1, illustré sur la figure 2, comprend des moyens de verrouillage 2 destinés à bloquer le tube-corps sur l'ensemble support de la colonne de direction 100, des moyens d'actionnement électrique 3 agencés pour entraîner les moyens de verrouillage 2 de façon à placer la colonne de direction 100 dans un état déverrouillé ou dans un état verrouillé, des moyens de commande 120 (non représenté sur la figure 2) pour commander les moyens de verrouillage 2 par l'intermédiaire des moyens d'actionnement électrique 3, ainsi que des moyens de détection de l'état de la colonne de direction.

Les moyens de commande 120 constituent l'interface avec le conducteur. Selon un mode réalisation particulier, les moyens de commande 120 consistent en un bouton poussoir (par la suite nommé bouton de commande 120) ou, afin de réduire les risques d'appui par inadvertance, deux boutons poussoir, disposés de préférence en série. Il est bien entendu évident que les moyens de commande 120 pourront se présenter sous une autre forme que celle d'un bouton poussoir sans sortir du cadre de l'invention. Il pourra s'agir par exemple d'un interrupteur, d'un capteur ou d'un calculateur. Il pourra s'agir également d'un signal haute fréquence ou d'une commande vocale.

Avantageusement, le bouton de commande 120 est disposé sur le volant de direction du véhicule. Cet emplacement offre ainsi un meilleur accès et une meilleure visibilité du bouton de commande 120. Selon une autre configuration, le bouton de commande 120 peut être disposé sur un support autre que le volant, mais tout en restant à proximité de celui-ci de manière à faciliter sa manipulation.

Avantageusement, le système de verrouillage est configuré pour que i) une pression du bouton de commande 120 entraîne le déverrouillage de la colonne de direction 100, permettant ainsi le réglage manuel en hauteur et/ou en profondeur de cette dernière, ii) le relâchement du bouton de commande 120 entraîne le verrouillage de la colonne de direction 100, celle-ci étant alors verrouillée dans la position dans laquelle elle se trouvait lors du relâchement du bouton de commande 120, iii) une pression prolongée du bouton de commande 120 démarre une réinitialisation de paramètres de calibration. En d'autres termes, les paramètres de calibration sont effacés. Le cycle de calibration et de réinitialisation sera détaillé plus loin.

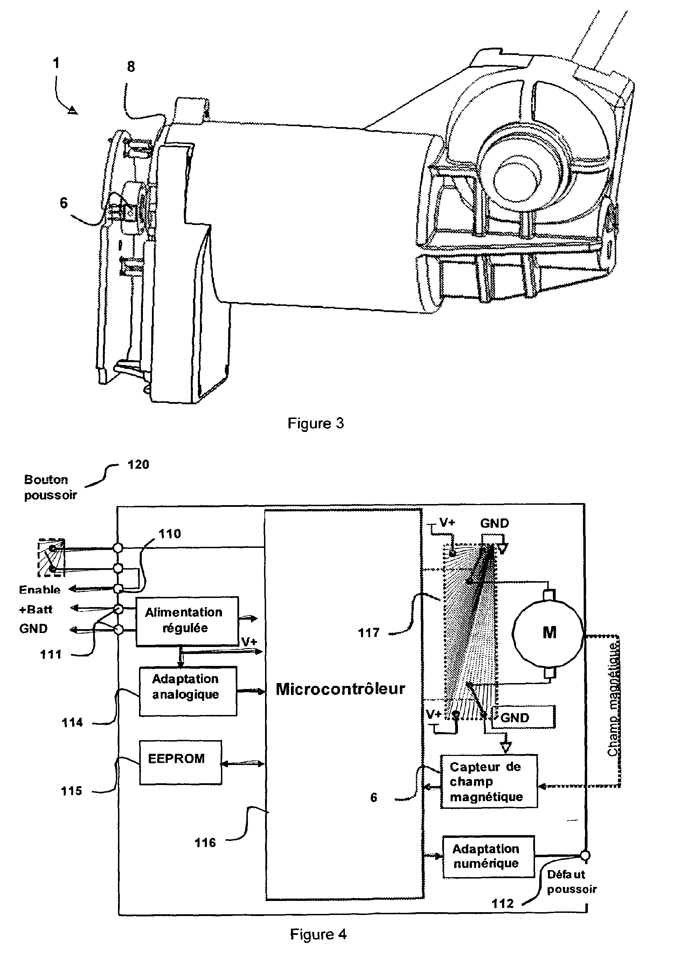

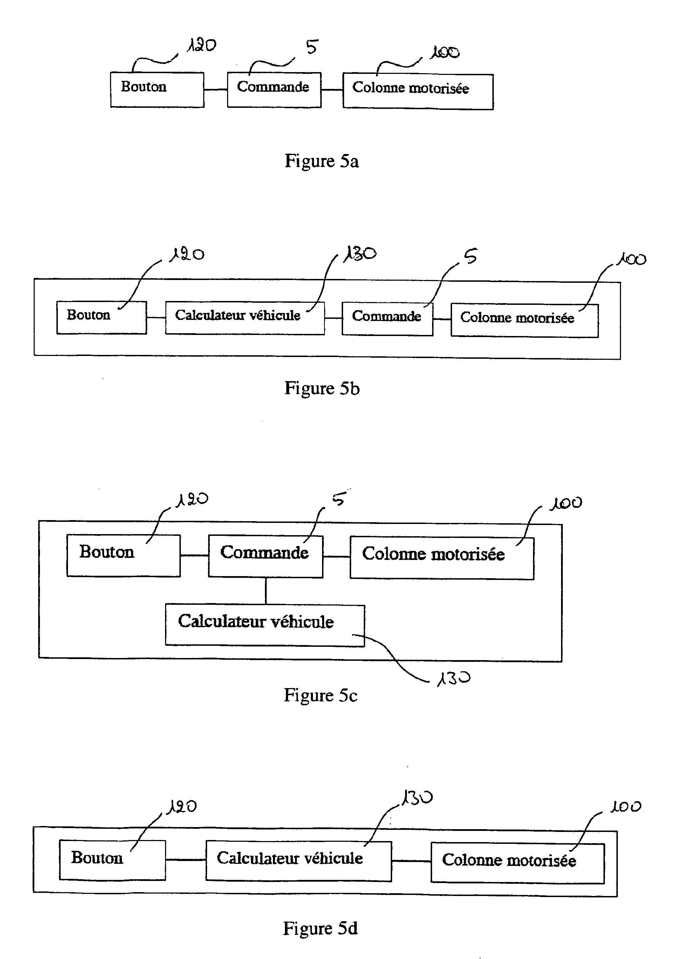

Les moyens d'actionnement électrique 3 comportent d'une part un moteur électrique 4 présentant un axe rotatif et d'autre part une unité de commande 5 dans laquelle est intégré un calculateur électronique (figures 4 et 5a).

Dans le mode de réalisation décrit, l'unité de commande 5 est portée par le moteur électrique 4, au niveau de l'une des extrémités de l'axe rotatif dudit moteur.

Par ailleurs, et comme on le verra plus loin, le calculateur électronique de l'unité de commande 5 permet la gestion de trois actions principales : la calibration du moteur électrique 4, le réglage de la colonne de direction 100 ainsi que l'exécution d'un programme nommé « défaut » en cas d'incidents de verrouillage ou déverrouillage ou de la non réponse à un ordre lancé par le calculateur électronique.

Avantageusement, l'unité de commande 5 est couplée aux moyens de commande 120. Ainsi, suivant l'action exercée sur les moyens de commande 120 (pression suivi ou non d'un ajustement de la colonne de direction, relâchement de la pression), ces derniers délivrent à l'unité de commande 5 des consignes d'activation du moteur électrique 4. Plus particulièrement, suivant l'action exercée sur les moyens de commande 120, des consignes spécifiques sont délivrées par l'unité de traitement 5 au moteur électrique 4 est activé en conséquence (activation du moteur électrique 4 pour sa calibration, activation du moteur électrique 4 pour faire passer la colonne de direction 100 d'un état verrouillé à un état déverrouillé et inversement, activation du moteur électrique 4 pour gérer des incidents de verrouillage ou déverrouillage ou de la non exécution d'ordres lancés par le calculateur électronique).

L'unité de commande 5 comporte également un circuit imprimé 50, une interface entre le circuit imprimé 50 et les moyens de commande 120 ou des modules spécifiques du véhicule, des moyens 8 permettant la connexion du circuit imprimé sur le moteur électrique 4, un microcontrôleur 116 et des moyens pour détecter l'état de la colonne de direction 100 (état déverrouillé ou verrouillé) suite à une commande du moteur électrique 4. Les moyens 8 pourront être filaires ou non.

Avantageusement, l'interface avec le véhicule peut être un connecteur ou un faisceau directement câblé sur l'unité de commande 5.

L'interface est configurée pour que l'unité de commande 5 reçoive, en provenance du véhicule, des signaux d'entrée relatifs à une autorisation de réglage de la colonne de direction 100 et à l'alimentation autonome du système de verrouillage électrique 1.

Avantageusement, l'autorisation de réglage de la colonne de direction 100 est caractérisée par un signal nommé « enable », comme illustré sur la figure 4. L'entrée 110 du signal « enable » est reliée à l'unité de commande 5. Il peut être prévu cependant, comme illustré sur la figure 4, de relier également l'entrée 110 de ce signal sur le bouton de commande 120. Ainsi, lorsque le signal « enable » est actif, un appui sur le bouton de commande 120 est détecté par l'unité de commande 5, cette dernière étant alors alimentée. Lorsque le signal « enable » est inactif, un appui sur le bouton de commande 120 ne génère aucune action de l'unité de commande 5 qui n'est alors pas alimentée. La consommation est donc nulle, au courant de fuite près.

L'alimentation autonome du système de verrouillage 1 est caractérisée par les signaux « +Batt » (ou « batterie ») et « GND » 111. Selon une configuration particulière, la tension est délivrée en permanence et directement par la batterie du véhicule.

Il est prévu également que l'interface soit également configurée pour que l'unité de commande 5 délivre au véhicule un signal de sortie relatif à des incidents de verrouillage ou déverrouillage de la colonne de direction 100 et/ou à la non-exécution d'un ordre lancé par l'unité de commande 5. Les incidents de verrouillage/déverrouillage de la colonne de direction 100, ainsi que la non-exécution d'un ordre, sont avantageusement caractérisés par un signal nommé « défaut» représenté sur la figure 4 (signal délivré par le circuit imprimé en sortie 112).

Avantageusement, l'unité de commande 5 est connectée à des moyens d'alerte permettant d'avertir l'utilisateur d'incidents de verrouillage/déverrouillage et/ou de la non-exécution d'une commande par le moteur électrique 4. Les moyens d'alerte consistent par exemple en un témoin lumineux, tels qu'une diode électroluminescente placée sur le tableau de bord ou intégrée dans le bouton de commande 120 et/ou un dispositif permettant l'émission d'un signal sonore. L'alerte peut être également délivrée par l'intermédiaire d'un message d'erreur affiché sur l'écran d'un ordinateur de bord du véhicule.

Les moyens de détection, quant à eux, sont agencés pour émettre un signal électrique représentatif de l'état verrouillé et/ou l'état déverrouillé de la colonne de direction 100.

Dans ce qui suit, les moyens de détection comprennent un capteur de champ magnétique 6 et un codeur magnétique 7 présentant N paires de pôles et solidaire de l'extrémité de l'arbre rotatif du moteur électrique 4 par lequel l'unité de commande 5 est portée. Il est bien entendu évident que d'autre types de capteurs et donc de codeurs adaptés peuvent être mis en oeuvre sans pour autant sortir du champ de l'invention. En particulier, les capteurs mis en oeuvre pourront être par exemple du type magnéto-résistifs, à effet hall, angulaires ou infrarouges.

Le capteur 6 est agencé avec le codeur magnétique 7 de manière à détecter une impulsion électrique correspondant au passage de chacun des pôles devant le capteur de champ magnétique 6. Dans le mode de réalisation décrit, le capteur de champ magnétique 6 est ménagé sur l'unité de commande 5. Cette configuration a pour avantage de permettre une intégration mécatronique améliorée et de supprimer toute liaison filaire entre le moteur électrique 4 et le circuit imprimé, réduisant ainsi le coût de fabrication du système de verrouillage 1 mais également améliorant la sécurité du fonctionnement de l'unité de commande 5.

Le microcontrôleur 116, quant à lui, embarque le logiciel gérant la stratégie de commande du moteur électrique, le pilotage du moteur électrique 4, l'acquisition du signal émis par le capteur de champ magnétique 6 à chacune des impulsions relevées lors du passage des pôles du codeur magnétique 7, la stratégie d'adaptation en fonction de la tension d'alimentation et le pilotage de la sortie du signal « défaut ».

Le microcontrôleur 116 pilote également avantageusement l'alimentation de l'unité de commande 5. Ainsi, celui-ci peut ordonner la coupure de sa propre alimentation lorsque le programme relatif au déverrouillage/verrouillage de la colonne de direction, géré par le microcontrôleur 116, a été exécuté. Cela permet ainsi de limiter la consommation électrique au seul courant de fuite lorsque l'unité de commande 5 est hors fonctionnement. Seule une pression sur le bouton de commande 120 pourra permettre l'initialisation d'un nouveau cycle de commande du moteur et donc une nouvelle alimentation de l'unité de commande. En effet, si le signal « enable » est présent, le microcontrôleur 116 est ponctuellement alimenté lors d'une pression sur le bouton de commande 120. Il actionne alors le régulateur de sorte que la régulation de l'alimentation soit activée. Le régulateur fournit alors l'énergie nécessaire aux composants du circuit imprimé via le module Batterie associé au signal « batterie ». L'alimentation est dès lors dissociée du bouton de commande 120.

Comme nous le verrons plus loin, le fonctionnement du système de verrouillage électrique 1 repose sur des paramètres de calibration du moteur préalablement mémorisé dans une mémoire de type EEPROM 115 de l'unité de commande 5. L'écriture des paramètres de calibration dans la mémoire 115, leur lecture et leur effacement sont effectués par le microcontrôleur 116. Selon la configuration souhaitée, la mémoire 115 peut être un composant relié ou intégré dans le microcontrôleur 116.

Selon une configuration avantageuse, l'alimentation de l'unité de commande 5 est régulée. Pour ce faire, l'unité de commande 5 comporte des moyens permettant d'adapter la tension « batterie » en fonction des besoins des divers composants de l'unité de commande 5 tels que le microcontrôleur 116. Les moyens d'adaptation de la tension « batterie » sont par exemple un régulateur de tension associé à des composants de filtrage.

Avantageusement, l'unité de commande 5 comporte un adaptateur analogique 114 permettant d'adapter la tension « batterie » de manière à ce que le microcontrôleur 116 puisse détecter une variation de la tension d'alimentation du moteur électrique 4 et adapte sa stratégie de commande en fonction de ce paramètre (protection des entrées/sorties du circuit imprimé, gestion de l'inertie moteur, etc.). En d'autres termes, l'adaptateur analogique 114 donne une image de la tension d'alimentation du moteur dans une plage de variation lisible par le microcontrôleur 116.

Avantageusement, l'alimentation, le freinage ainsi que l'inversion de polarité du moteur électrique 4 permettant le changement de sens de rotation de celui-ci sont obtenus au moyen d'un pont en H (référence 117 sur la figure 4).

Avantageusement, le moteur électrique 4 est couplé aux moyens de verrouillage 2 du tube-corps par l'intermédiaire de moyens de transmission du mouvement rotatif du moteur électrique 4.

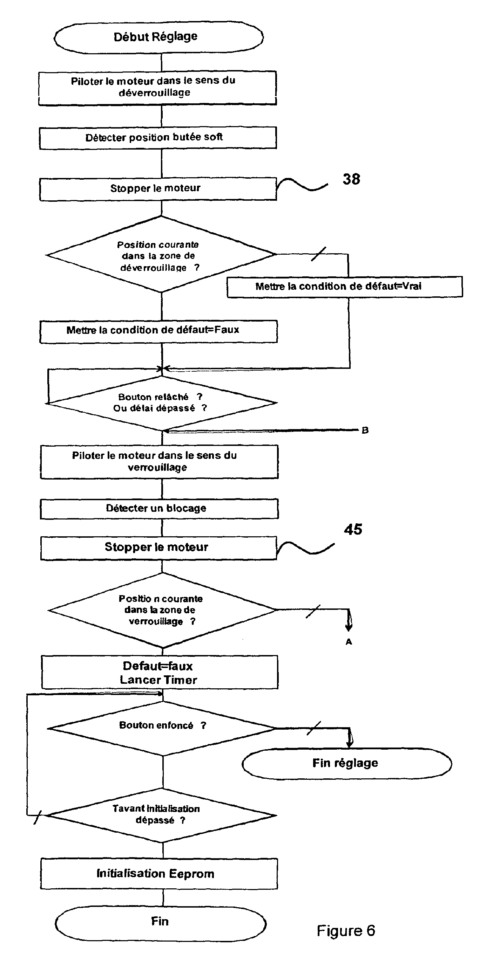

Le réglage de la colonne de direction 100 s'effectue selon le principe général suivant et représenté sur la figure 6.

Sur appui du bouton de commande 120, le moteur électrique 4 est actionné dans le sens associé au déverrouillage de la colonne de direction 100, entraînant, lors de sa rotation, les moyens de verrouillage 2 de façon à relâcher la tension exercée par les moyens de verrouillage sur la colonne de direction. La colonne de direction 100 est alors déverrouillée. Il peut être procédé au réglage manuel de la colonne.

Sur relâchement du bouton de commande 120, le moteur électrique 4 est actionné dans le sens inverse, entraînant, lors de sa rotation, les moyens de verrouillage 2 de manière à appliquer à nouveau une tension entre les moyens de verrouillage 2 et la colonne de direction 100. La colonne de direction 100 verrouillée, son réglage est alors impossible.

La tension appliquée par les moyens de verrouillage 2 sur la colonne de direction 100, et donc la conformité du verrouillage ou déverrouillage est liée directement au nombre de tours parcouru par le moteur. Cette donnée est obtenue grâce aux moyens de détection, à savoir le codeur magnétique 7 et le capteur de champ magnétique 6 ménagés respectivement sur le moteur électrique 4 et l'unité de commande 5. En effet, lorsque le moteur est actionné, le codeur magnétique 7 à N paires de pôles, solidaire de l'axe rotatif du moteur, tourne devant le capteur de champ magnétique porté par l'unité de commande 5. Le microcontrôleur 116, qui relève le nombre d'impulsions détectées par le capteur, détermine alors le nombre de tours effectués par le moteur électrique 4, étant considéré que N impulsions correspondent à un tour moteur.

Le déverrouillage ou verrouillage de la colonne de direction 100 s'effectue donc selon un pilotage spécifique du moteur électrique 4 par le biais d'un actionnement des moyens de commande 120.

Selon l'invention, il est prévu, préalablement à l'activation du moteur électrique 4 par les moyens de commande 120, que le calculateur de l'unité de commande 5 procède à une étape de vérification de l'existence de paramètres de calibration du moteur électrique 4 enregistrés dans la mémoire 115 de l'unité de commande 5.

Si l'existence de paramètres de calibration dans la mémoire 115 est vérifiée, l'unité de commande 5 autorise les opérations permettant le passage de l'état verrouillé à l'état déverrouillé de la colonne de direction 100. En revanche, si l'existence de paramètres de calibration n'est pas vérifiée, l'unité de commande 5 actionne la calibration du moteur électrique 4. Cette opération sera décrite plus loin.

Pour faire passer la colonne de direction 100 de l'état verrouillé à l'état déverrouillé, l'unité de commande 5 pilote le moteur électrique 4 de manière à l'entraîner en rotation dans le sens correspondant au déverrouillage de la colonne de direction 100. Le moteur électrique 4 tourne alors jusqu'à atteindre une position appelée « butée soft ». Elle caractérise la position optimale pour laquelle l'unité de commande 5 doit donner l'ordre de ne plus alimenter le moteur électrique 4 Elle constitue un des paramètres de calibration du moteur électrique 4. Elle correspond donc, comme nous le verrons plus loin, à une position déterminée au cours d'une étape de calibration préalable du moteur électrique 4.

Lorsque l'unité de commande 5 détecte que la position « soft » du moteur électrique 4 est atteinte, l'alimentation de celui-ci est coupée.

Après avoir choisi la position de la colonne de direction 100, l'utilisateur lâche le bouton de commande 120. Cette action génère alors la commande de la mise en rotation du moteur électrique 4 par l'unité dans le sens inverse à celui correspondant au déverrouillage de la colonne de direction 100 (sens correspondant au verrouillage de la colonne de direction 100). Le moteur électrique 4 tourne alors jusqu'à atteindre une position dite « de verrouillage ». Cette position constitue également un paramètre de calibration du moteur électrique 4. Elle correspond donc, comme nous le verrons plus loin, à une position déterminée au cours d'une étape de calibration préalable du moteur électrique 4.

Lorsque l'unité de commande 5 détecte que la position « de verrouillage» du moteur électrique 4 est atteinte, l'alimentation de celui-ci est coupée.

Dans le cas particulier des colonnes de direction à verrouillage par système à crémaillère, il s'avère nécessaire d'effectuer des opérations de contrôle pour s'assurer que la colonne de direction 100 est parfaitement déverrouillée ou verrouillée selon la commande effectuée. En effet, la colonne de direction 100 est dans un état correctement verrouillé lorsque les éléments dentés du système de verrouillage à crémaillère sont positionnés de sorte que les dents s'imbriquent entre elles et dans un état correctement déverrouillé lorsque les dents de chacun des éléments du système de verrouillage ne sont plus en contact. A contrario, la colonne de direction 100 est dans un état mal verrouillé lorsque les éléments dentés du système de verrouillage à crémaillère sont positionnés de sorte que les dents se chevauchent. On parle alors de position « dents sur dents ». Pour les colonnes de direction à verrouillage par système à crémaillère, il est donc prévu des paramètres de calibration supplémentaires relatifs à une « zone de déverrouillage » et une «zone de verrouillage » correspondant respectivement à une zone où la colonne de direction 100 est totalement déverrouillée et une zone où la colonne de direction 100 est totalement verrouillée.

Les zones de déverrouillage et verrouillage sont des zones comprises respectivement entre une première position prédéfinie propre à la colonne de direction et la position de blocage mécanique de fin de course de déverrouillage d'une part, et entre une deuxième position prédéfinie propre également à la colonne de direction et la position de blocage mécanique de fin de course d'autre part.

Ainsi, suite à un ordre passé de déverrouillage de la colonne, l'unité de commande 5 procède, après l'arrêt du moteur (étape 38), à une vérification selon laquelle la colonne de direction 100 est bien déverrouillée, ie. contrôle si la position courante de la colonne est bien dans la zone de déverrouillage en mémoire. Si tel est le cas, la variable « défaut » est forcée à « faux ». Sinon, la variable « défaut » est forcée à « vrai », ie. le cycle de déverrouillage est réinitialisé.

De même, suite à un ordre passé de verrouillage de la colonne de direction, l'unité de commande 5 procède, après l'arrêt du moteur (étape 45), à une vérification selon laquelle la colonne de direction 100 est bien verrouillée, ie. contrôle si la position courante de la colonne est bien dans la zone de verrouillage en mémoire. Si tel est le cas, la variable « défaut » est forcée à « faux ». En revanche, si la position courante de la colonne de direction 100 ne se situe pas dans la zone de verrouillage, une procédure de gestion du « dents sur dents » est activée.

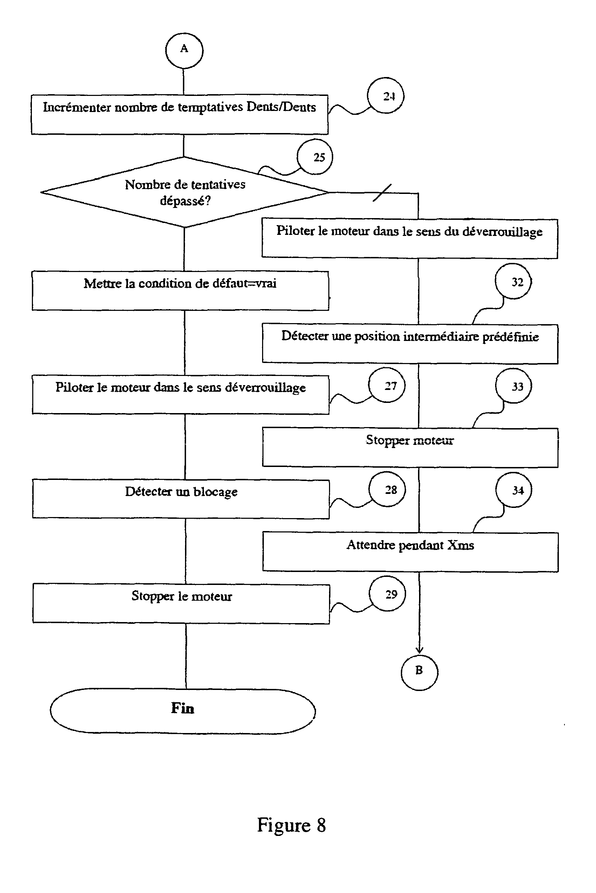

La procédure de gestion du « dents sur dents », schématisée sur la figure 8, consiste en des tentatives successives pour amener la colonne de direction 100 à se positionner dans la zone de verrouillage. Plus particulièrement, l'unité de commande 5 va procéder à la commande de plusieurs tentatives de déverrouillage puis verrouillage de la colonne de direction 100 sans qu'une intervention de l'utilisateur ne soit nécessaire. Avantageusement, le nombre de tentatives sera de trois. A chaque tentative, un compteur associé est incrémenté (étape 24). Entre chaque tentative, il peut être prévu une temporisation comprise entre 0 et 3 secondes.

Tant que le nombre de tentatives autorisées n'est pas dépassé, la commande déverrouille la colonne de direction 100 jusqu'à une position intermédiaire prédéterminée (étape 32), stoppe le moteur (étape 33), attend un temps prédéfini (étape 34) puis reprend le cycle normal de verrouillage (figure 6) jusqu'à ce que le verrouillage soit correct. Le choix de déverrouiller la colonne de direction 100 jusqu'à une position intermédiaire seulement permet de réduire le temps relatif aux tentatives.

Si le nombre de tentatives autorisées est atteint (étape 25), sans qu'un verrouillage correct soit effectué, la variable « défaut » est forcée à vrai. Le moteur est alors piloté par l'unité de commande 5 dans le sens du déverrouillage (étape 27) jusqu'à un blocage en butée mécanique de fin de course (étape 28), puis son alimentation est coupée (étape 29). Les positions de butée ne sont pas sauvegardées et le système est considéré comme non calibré. L'opération de réglage de la colonne de direction 100 n'est alors pas autorisée.

La gestion du « dents sur dents peut également consister en une étape de déverrouillage de la colonne de direction laquelle sera suivie d'une nouvelle tentative de verrouillage lorsqu'un nouveau changement d'état du signal d'activation est généré (par exemple par les moyens de commande 120). Cela permet ainsi au conducteur de bouger le volant et ainsi sortir de la zone du « dents sur dents ».

Avantageusement, il peut être prévu une désactivation automatique du bouton de commande 120 du moteur électrique 4 au bout d'un certain temps prédéfini et enregistré dans la mémoire 115 de l'unité de commande 5. La colonne de direction 100 ne pourra pas rester déverrouillée, même dans le cas où le bouton de commande 120 reste enfoncé alors que l'utilisateur n'exerce plus d'appui.

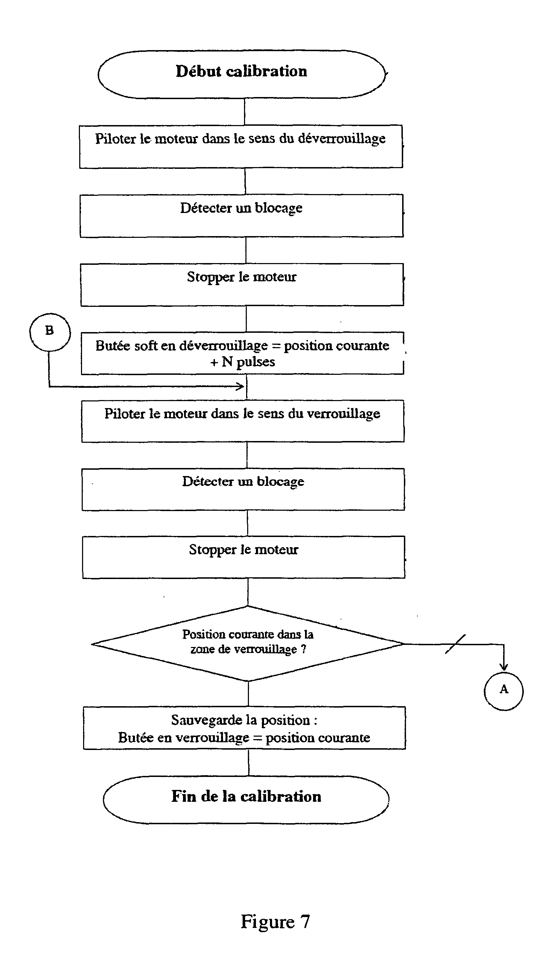

L'étape de calibration du moteur électrique 4, schématisée sur la figure 7, consiste à déterminer et mettre en mémoire dans l'unité de commande 5 des données spécifiques auxquelles le moteur électrique 4 doit répondre selon que la colonne passe d'un état verrouillé à un état déverrouillé et inversement. Ces données constituent les paramètres de calibration du moteur électrique 4.

Les paramètres de calibration comprennent notamment mais non exclusivement la position « butée soft », la position de verrouillage, les zones de déverrouillage et verrouillage lorsque la colonne de direction 100 est une colonne à crémaillère.

Pour que la calibration débute, il est nécessaire de remplir des conditions de calibration. Les conditions de calibration comportent au moins un appui sur le bouton de commande 120 pendant un temps défini, une tension d'alimentation du moteur électrique 4 comprise dans une plage définie, l'absence de paramètres de calibration tels que la position courante de la colonne de direction, le nombre d'impulsions correspondant aux « butées soft » sauvegardés dans la mémoire 115 de l'unité de commande 5.

Une fois les conditions de calibration remplies, la première manoeuvre du cycle de calibration consiste en la détermination de la position « butée soft ». La position de « butée soft » est quantifiée en nombre d'impulsion. Elle correspond à la position pour laquelle le moteur électrique 4 est bloqué mécaniquement en fin de course complète plus un nombre N d'impulsions. Le nombre d'impulsions N est déterminé suivant plusieurs critères, et notamment la tension d'alimentation et l'inertie du moteur. Le nombre N est actualisé en permanence en fonction de la variation de ces critères. Par ce faire, le moteur électrique 4 est toujours arrêté avant d'atteindre le blocage mécanique en fin de course. Cela permet ainsi d'éviter qu'un choc du moteur n'intervienne et par conséquent éviter le bruit induit par un tel choc.

La position « butée soft » est déterminée de la manière suivante. Le moteur électrique 4 est piloté par l'unité de commande 5 dans le sens correspondant au déverrouillage de la colonne de direction 100 et ce, jusqu'à l'arrêt du moteur en butée mécanique de fin de course. Lorsque le moteur électrique 4 arrive en butée mécanique de fin de course, le capteur ne relève plus aucune impulsion relative au passage des pôles du codeur magnétique 7 devant le capteur alors que le moteur est toujours alimenté. La « butée soft » est alors déduite et sauvegardée dans la mémoire 115 d'unité de commande 5.

La deuxième manoeuvre du cycle de calibration consiste en la détermination de la position de verrouillage de la colonne de direction 100.

Pour ce faire, le moteur électrique 4 est piloté par l'unité de commande 5 dans le sens correspondant au verrouillage jusqu'à l'arrêt du moteur en blocage. L'unité de commande 5, détectant le blocage du moteur électrique 4, coupe l'alimentation de ce dernier. Le blocage du moteur électrique 4 correspond, dans les colonnes de directions autres que les colonnes à crémaillère, à l'arrivée en fin de course du moteur. Cette position de fin de course correspond à un verrouillage optimal de la colonne de direction 100. La position de fin de course ainsi déterminée est alors sauvegardée dans la mémoire 115 de l'unité de commande 5.

Le blocage du moteur électrique 4 peut toutefois intervenir, dans le cas des colonnes de direction à verrouillage par système à crémaillère lorsque les éléments du système de verrouillage à crémaillère sont positionnés dents sur dents. Dans ce cas, bien que le moteur électrique 4 soit bloqué, la colonne de direction 100 n'est pas verrouillée. Il est donc nécessaire, pour de telles colonnes de direction, de définir la zone de verrouillage dans laquelle le verrouillage de la colonne de direction 100 est garanti.

Il est donc nécessaire, dans le cas des colonnes de direction à verrouillage par système à crémaillère, de vérifier si la colonne de direction 100 est bien verrouillée, c'est-à-dire de contrôler si la position courante de la colonne de direction 100 est dans la zone de verrouillage. Si tel est le cas, la position courante est sauvegardée et la calibration est considérée comme terminée. En revanche, si la position courante après blocage du moteur électrique 4 est hors de la zone de verrouillage, la procédure de gestion du « dents sur dents» précédemment décrite est activée.

Dans l'exemple de système de verrouillage électrique 1 décrit précédemment, le calculateur électronique est intégré dans l'unité de commande 5 (figure 5a). Il peut être cependant prévu également, comme l'illustrent les figures5b, 5c et 5d, un système de réglage électrique 1 dont l'unité de commande 5 est associée à un calculateur électronique 130 du véhicule déjà existant (calculateurs destinés à la climatisation du véhicule, l'assistance de à la direction du véhicule, etc.) Selon les cas, il pourra être avantageux de prévoir un calculateur électronique 130 existant agencé de manière à relier les moyens de commande 120 à l'unité de commande 5 (figure 5b). Selon une autre configuration, le système peut ne pas comprendre d'unité de commande 5 telle que décrite précédemment. Le calculateur électronique existant du véhicule sera alors agencé de manière à relier les moyens de commande 120 à la colonne de direction 100 (figure 5d).

Par ailleurs, les moyens de verrouillage 2 pourront être avantageusement du type de ceux décrit dans la demande internationale WO2008/152253.

Avantageusement, le système de verrouillage peut être doté de moyens de communication par protocole CAN, LIN ou similaires permettant le dialogue du système avec d'autres calculateurs du véhicule.

Avantageusement, il peut être prévu d'alimenter le système de verrouillage en continu de manière à permettre un réglage non seulement lorsque le véhicule est à l'arrêt mais également lorsque le véhicule est en déplacement.

L'invention est décrite dans ce qui précède à titre d'exemple. Il est entendu que l'homme du métier est à même de réaliser différentes variantes de réalisation de l'invention tant qu'il reste dans le cadre de l'invention, défini par les revendications.

## Revendications

1. Système de verrouillage électrique (1) de la position d'une colonne de direction (100) d'un véhicule par rapport au tableau de bord dudit véhicule, la colonne de direction (100) comprenant un ensemble support destiné à être fixé sur un châssis de véhicule et un tube-corps monté mobile dans l'ensemble support pour permettre un ajustement manuel de la position du tube-corps par rapport à l'ensemble support, le système de verrouillage comprenant :
- des moyens de verrouillage (2) du tube-corps sur l'ensemble support,
- un moteur électrique (4) couplé aux moyens de verrouillage (2) du tube-corps pour entraîner les moyens de verrouillage (2) de façon à placer la colonne de direction (100) dans un état déverrouillé ou dans un état verrouillé,
- des moyens de commande (120) du moteur électrique (4), délivrant des consignes d'activation du moteur électrique (4) pour placer la colonne de direction (100) dans l'état verrouillé et/ou l'état déverrouillé,
- des moyens de détection de l'état de la colonne de direction (100) pour émettre un signal électrique représentatif de l'état de la colonne de direction (100),
**caractérisé en ce que** le système de verrouillage comporte en outre un calculateur électronique pour la calibration et des moyens de détection de la non-exécution des consignes d'activation par le moteur électrique.

2. Système de verrouillage électrique (1) de la position d'une colonne de direction (100) selon la revendication 1, **caractérisé en ce qu'**il comporte en outre une unité de commande (5) reliée aux moyens de commande pour pour alimenter le moteur électrique en réponse aux consignes d'activation.

3. Système de verrouillage électrique (1) de la position d'une colonne de direction (100) selon la revendication 2, **caractérisé en ce que** l'unité de commande (5) est reliée aux moyens de détection pour émettre une alarme en fonction du signal électrique représentatif de l'état de la colonne de direction et des consignes d'activation.

4. Système de verrouillage électrique (1) de la position d'une colonne de direction (100) selon la revendication 2 ou la revendication 3, **caractérisé en ce que** l'unité de commande (5) est portée par le moteur électrique (4).

5. Système de verrouillage électrique (1) de la position d'une colonne de direction (100) selon l'une quelconque des revendications 1 à 4, caractérisé en ce les moyens de détection comprennent un codeur (7) ménagé sur le moteur électrique (4) couplé à un capteur (6) de manière à détecter le nombre de tours effectué par le moteur électrique (4).

6. Système de verrouillage électrique (1) de la position d'une colonne de direction (100) selon la revendication 5, **caractérisé en ce que** le capteur (6) est ménagé sur l'unité de commande (5).

7. Système de verrouillage électrique (1) de la position d'une colonne de direction (100) selon la revendication 5 ou la revendication 6, **caractérisé en ce que** le capteur (6) et le codeur (7) sont respectivement un capteur de champ magnétique (6) et un codeur magnétique (7), le codeur magnétique présentant au moins une paire de pôles solidaire du moteur électrique (4).

8. Système de verrouillage électrique (1) de la position d'une colonne de direction (100) selon l'une quelconque des revendications 1 à 7, **caractérisé en ce que** lesdits moyens sont couplés à des moyens d'alerte délivrant un signal sonore et/ou visuel.

9. Système de verrouillage électrique (1) de la position d'une colonne de direction (100) selon l'une quelconque des revendications 1 à 8, **caractérisé en ce que** les moyens de commande (120) sont positionnés au niveau d'un volant de direction.

10. Colonne de direction (100) comprenant un ensemble support destiné à être fixé sur un châssis de véhicule et un tube-corps monté mobile dans l'ensemble support pour permettre un ajustement manuel de la position du tube-corps par rapport à l'ensemble support, **caractérisée en ce qu'**elle comporte un système de verrouillage selon l'une quelconque des revendications 1 à 9.

11. Procédé d'ajustement de la position d'une colonne de direction (100) d'un véhicule par rapport au tableau de bord dudit véhicule, la colonne de direction (100) comprenant un ensemble support destiné à être fixé sur un châssis de véhicule et un tube-corps monté mobile dans l'ensemble support, le procédé comprenant les étapes consistant à :
- déverrouiller la colonne de direction (100) par activation d'un moteur électrique (4) pour placer la colonne de direction dans un état déverrouillé,
- ajuster manuellement la position du tube-corps par rapport à l'ensemble support,
- verrouiller la colonne de direction (100) par activation d'un moteur électrique (4) pour placer la colonne de direction dans un état verrouillé,
- détecter l'état de la colonne de direction (100) et d'une étape d'émission d'un signal électrique représentatif de l'état de la colonne de direction (100)et en fonction du signal émis, des consignes d'activations du moteur électrique (4) sont générées de manière à placer la colonne dans l'état verrouillé ou déverrouillé attendu,
**caractérisé en ce qu'**il comprend une étape préalable de vérification de l'existence de paramètres de calibration en mémoire dans une unité de commande (5) du moteur électrique (4) et une étape de détection de la non-exécution des consignes d'activation par le moteur électrique.

12. Procédé d'ajustement de la position d'une colonne de direction (100) d'un véhicule par rapport au tableau de bord dudit véhicule selon la revendication 11, **caractérisé en ce que** si l'existence de paramètres de calibration n'est pas vérifiée, il est procédé à une étape de calibration consistant à déterminer et mettre en mémoire dans l'unité de commande (5) des données spécifiques permettant le passage d'un état déverrouillé à un état verrouillé, et inversement, de la colonne de direction (100).

13. Procédé d'ajustement de la position d'une colonne de direction (100) d'un véhicule par rapport au tableau de bord dudit véhicule selon la revendication 12, **caractérisé en ce que** les données spécifiques comprennent le nombre de tours suivant un sens donné à effectuer par le moteur électrique (4) par rapport à une position de référence pour atteindre une position déterminée correspondant à l'état déverrouillé et/ou l'état verrouillé de la colonne de direction (100).

14. Procédé d'ajustement de la position d'une colonne de direction (100) d'un véhicule par rapport au tableau de bord dudit véhicule selon la revendication 13, **caractérisé en ce que** la position du moteur électrique (4) permettant le déverrouillage de la colonne de direction (100) est déterminée à partir d'une position de blocage mécanique de fin de course du moteur électrique (4) en rotation dans le sens correspondant au déverrouillage de la colonne de direction (100) et du nombre de tours effectués par le moteur.

15. Procédé d'ajustement de la position d'une colonne de direction (100) d'un véhicule par rapport au tableau de bord dudit véhicule selon la revendication 13 ou la revendication 14, **caractérisé en ce que** le moteur électrique (4) est arrêté automatiquement lorsqu'il atteint la position caractérisant l'état déverrouillé et/ou l'état verrouillé de la colonne de direction (100).

16. Procédé d'ajustement de la position d'une colonne de direction (100) d'un véhicule par rapport au tableau de bord dudit véhicule selon l'une quelconque des revendications 11 à 15, **caractérisé en ce qu'**il comporte une étape de verrouillage automatique de la colonne de direction (100) par l'unité de commande (5) lorsque la durée du maintien de la colonne de direction (100) dans l'état déverrouillé dépasse un seuil limite de durée de maintien déterminé.

## Patentansprüche

1. System zur elektrischen Verriegelung (1) der Position einer Lenksäule (100) eines Fahrzeugs mit Bezug auf das Armaturenbrett des Fahrzeugs, wobei die Lenksäule (100) eine Stützgruppe umfasst, die ausgelegt ist, um auf einem Fahrzeugrahmen fixiert zu sein, und einen Rohrkörper, der beweglich in der Stützgruppe montiert ist, um eine manuelle Einstellung der Position des Rohrkörpers mit Bezug auf die Stützgruppe zu ermöglichen, wobei das System zur Verriegelung Folgendes umfasst:
- Mittel zur Verriegelung (2) des Rohrkörpers auf der Stützeinheit,
- einen elektrischen Motor (4), der mit den Mitteln zur Verriegelung (2) des Rohrkörpers gekoppelt ist, um die Mittel zur Verriegelung (2) anzutreiben, um die Lenksäule (100) in einen entriegelten Zustand oder in einen verriegelten Zustand zu versetzten,
- Mittel zur Steuerung (120) des elektrischen Motors (4), die Anweisungen zur Aktivierung des elektrischen Motors (4) liefern, um die Lenksäule (100) in den verriegelten Zustand und/oder den entriegelten Zustand zu versetzen,
- Mittel zum Nachweis des Zustands der Lenksäule (100), um ein elektrisches Signal auszugeben, das den Zustand der Lenksäule (100) darstellt,
**dadurch gekennzeichnet, dass** das System zur Verriegelung außerdem einen elektronischen Rechner zur Kalibrierung und Mittel zum Nachweis der Nicht-Durchführung der Anweisungen zur Aktivierung des elektrischen Motors umfasst.

2. System zur elektrischen Verriegelung (1) der Position einer Lenksäule (100) nach Anspruch 1, **dadurch gekennzeichnet, dass** es außerdem eine Steuereinheit (5) umfasst, die mit den Mitteln zur Steuerung verbunden ist, um den elektrischen Motor in Reaktion auf die Anweisungen zur Aktivierung zu versorgen.

3. System zur elektrischen Verriegelung (1) der Position einer Lenksäule (100) nach Anspruch 2, **dadurch gekennzeichnet, dass** die Steuereinheit (5) mit den Mitteln zum Nachweis verbunden ist, um einen Alarm je nach dem elektrischen Signal auszugeben, der den Zustand der Lenksäule und der Anweisungen zur Aktivierung darstellt.

4. System zur elektrischen Verriegelung (1) der Position einer Lenksäule (100) nach Anspruch 2 oder Anspruch 3, **dadurch gekennzeichnet, dass** die Steuereinheit (4) vom elektrischen Motor (4) getragen wird.

5. System zur elektrischen Verriegelung (1) der Position einer Lenksäule (100) nach einem der Ansprüche 1 bis 4, **dadurch gekennzeichnet, dass** die Nachweismittel einen Codierer (7) umfassen, der auf dem elektrischen Motor (4) angebracht ist, der mit einem Sensor (6) gekoppelt ist, um die Anzahl der Drehungen nachzuweisen, die vom elektrischen Motor (4) durchgeführt werden.

6. System zur elektrischen Verriegelung (1) der Position einer Lenksäule (100) nach Anspruch 5, **dadurch gekennzeichnet, dass** der Sensor (6) auf der Steuereinheit (5) angebracht ist.

7. System zur elektrischen Verriegelung (1) der Position einer Lenksäule (100) nach Anspruch 5 oder Anspruch 6, **dadurch gekennzeichnet, dass** der Sensor (6) und der Codierer (7) ein Magnetfeldsensor (6) bzw. ein Magnetcodierer (7) sind, wobei der Magnetcodierer mindestens ein Paar Pole aufweist, die fest mit dem elektrischen Motor (4) verbunden sind.

8. System zur elektrischen Verriegelung (1) der Position einer Lenksäule (100) nach einem der Ansprüche 1 bis 7, **dadurch gekennzeichnet, dass** die Mittel mit Alarmmitteln verbunden sind, die ein akustisches und/oder visuelles Signal ausgeben.

9. System zur elektrischen Verriegelung (1) der Position einer Lenksäule (100) nach einem der Ansprüche 1 bis 8, **dadurch gekennzeichnet, dass** die Mittel zur Steuerung (120) im Bereich eines Lenkrads positioniert sind.

10. Lenksäule (100), umfassend eine Stützgruppe, die ausgelegt ist, um auf einem Fahrzeugrahmen fixiert zu sein, und einen Rohrkörper, der beweglich in der Stützgruppe montiert ist, um eine manuelle Einstellung des Position des Rohrkörpers mit Bezug auf die Stützgruppe zu ermöglichen, **dadurch gekennzeichnet, dass** sie ein System zu Verriegelung nach einem der Ansprüche 1 bis 9 umfasst.

11. Verfahren zur Einstellung der Position einer Lenksäule (100) eines Fahrzeugs mit Bezug auf das Armaturenbrett des Fahrzeugs, wobei die Lenksäule (100) eine Stützgruppe umfasst, die ausgelegt ist, um auf einem Fahrzeugrahmen fixiert zu sein, und einen Rohrkörper, der beweglich in der Stützgruppe montiert ist, wobei das Verfahren die Schritte umfasst, die aus Folgendem bestehen:
- Entriegeln der Lenksäule (100) durch Aktivieren eines elektrischen Motors (4), um die Lenksäule in einen entriegelten Zustand zu versetzten,
- manuelles Einstellen der Position des Rohrkörpers mit Bezug auf die Stützeinheit,
- Verriegeln der Lenksäule (100) durch Aktivieren eines elektrischen Motors (4), um die Lenksäule in einen verriegelten Zustand zu versetzen,
- Nachweisen des Zustands der Lenksäule (100) und eines Schritts des Ausgebens eines elektrischen Signals, das den Zustand der Lenksäule (100) darstellt, und in Funktion des ausgegebenen Signals werden Anweisungen zur Aktivierung des elektrischen Motors (4) erzeugt, um die Lenksäule in den erwarteten verriegelten oder entriegelten Zustand zu versetzen,
**dadurch gekennzeichnet, dass** es einen vorherigen Schritt des Überprüfens des Vorhandenseins von Parametern zur Kalibrierung im Speicher in einer Steuereinheit (5) des elektrischen Motors (4) und einen Schritt des Nachweisens der Nicht-Durchführung der Anweisungen zur Aktivierung durch den elektronischen Motor umfasst.

12. Verfahren zur Einstellung der Position einer Lenksäule (100) eines Fahrzeugs mit Bezug auf das Armaturenbrett des Fahrzeugs nach Anspruch 11, **dadurch gekennzeichnet, dass**, wenn das Vorhandensein von Parametern zur Kalibrierung nicht überprüft wird, zu einem Kalibrierungsschritt übergegangen wird, der darin besteht, spezifische Daten zu bestimmen und in einer Steuereinheit (5) zu speichern, die den Übergang von einem entriegelten Zustand in einen verriegelten Zustand und umgekehrt der Lenksäule (100) ermöglichen.

13. Verfahren zur Einstellung der Position einer Lenksäule (100) eines Fahrzeugs mit Bezug auf das Armaturenbrett des Fahrzeugs nach Anspruch 12, **dadurch gekennzeichnet, dass** die spezifischen Daten die Anzahl der Umdrehungen in eine Richtung umfassen, die vom elektrischen Motor (4) mit Bezug auf eine Referenzposition durchgeführt werden müssen, um eine bestimmte Position zu erreichen, die dem entriegelten Zustand und/oder dem verriegelten Zustand der Lenksäule (100) entspricht.

14. Verfahren zur Einstellung der Position einer Lenksäule (100) eines Fahrzeugs mit Bezug auf das Armaturenbrett des Fahrzeugs nach Anspruch 13, **dadurch gekennzeichnet, dass** die Position des elektrischen Motors (4), die die Entriegelung der Lenksäule (100) ermöglicht, ausgehend von einer Position der mechanischen Blockierung am Hubende des elektrischen Motors (4) in Drehung in der Richtung, die der Entriegelung der Lenksäule (100) entspricht und ausgehend von der Anzahl der Umdrehungen, die vom Motor durchgeführt werden, bestimmt wird.

15. Verfahren zur Einstellung der Position einer Lenksäule (100) eines Fahrzeugs mit Bezug auf das Armaturenbrett des Fahrzeugs nach Anspruch 13 oder Anspruch 14, **dadurch gekennzeichnet, dass**, der elektrische Motor (4) automatisch angehalten wird, wenn er die Position erreicht, die den entriegelten Zustand und/oder den verriegelten Zustand der Lenksäule (100) charakterisiert.

16. Verfahren zur Einstellung der Position einer Lenksäule (100) eines Fahrzeugs mit Bezug auf das Armaturenbrett des Fahrzeugs nach einem der Ansprüche 11 bis 15, **dadurch gekennzeichnet, dass** es einen Schritt der automatischen Verriegelung der Lenksäule (100) durch die Steuereinheit (5) umfasst, wenn die Dauer des Beibehaltens der Lenksäule (100) im entriegelten Zustand eine vorbestimmte Grenzschwellendauer des Beibehaltens übersteigt.

## Claims

1. System (1) for the electrical locking of the position of the steering column (100) of a vehicle with respect to the dashboard of said vehicle, the steering column (100) comprising a support assembly intended to be fixed to a vehicle chassis and a tube body mounted so as to be able to move in the support assembly to allow manual adjustment of the position of the tube body with respect to the support assembly, the locking system comprising:
- means (2) for locking the tube body on the support assembly,
- an electric motor (4) coupled to the means (2) for locking the tube body in order to drive the locking means (2) so as to place the steering column (100) in an unlocked state or a locked state,
- means (120) for controlling the electric motor (4), delivering instructions for activation of the electric motor (4) in order to place the steering column (100) in the locked state and/or the unlocked state,
- means for detecting the state of the steering column (100) in order to emit an electrical signal representing the state of the steering column (100),
**characterised in that** the locking system further comprises an electronic computer for calibration and means for detecting the non-execution of the activation instructions by the electric motor.

2. System (1) for the electrical locking of the position of a steering column (100) according to claim 1, **characterised in that** it further comprises a control unit (5) connected to the control means in order to supply the electric motor in response to the activation instructions.

3. System (1) for the electrical locking of the position of a steering column (100) according to claim 2, **characterised in that** the control unit (5) is connected to the detection means in order to emit an alarm according to the electrical signal representing the state of the steering column and the activation instructions.

4. System (1) for the electrical locking of the position of a steering column (100) according to claim 2 or claim 3, **characterised in that** the control unit (5) is carried by the electric motor (4).

5. System (1) for the electrical locking of the position of a steering column (100) according to any one of claims 1 to 4, **characterised in that** the detection means comprises a coder (7) provided on the electric motor (4) coupled to a sensor (6) so as to detect the number of turns made by the electric motor (4).

6. System (1) for the electrical locking of the position of a steering column (100) according to claim 5, **characterised in that** the sensor (6) is provided on the control unit (5).

7. System (1) for the electrical locking of the position of a steering column (100) according to claim 5 or claim 6, **characterised in that** the sensor (6) and the coder (7) are respectively a magnetic-field sensor (6) and a magnetic coder (7), the magnetic coder having at least one pair of poles secured to the electric motor (4).

8. System (1) for the electrical locking of the position of a steering column (100) according to any one of claims 1 to 7, **characterised in that** said means are coupled to alert means delivering an audible and/or visual signal.

9. System (1) for the electrical locking of the position of a steering column (100) according to any one of claims 1 to 8, **characterised in that** the control means (120) are positioned at a steering wheel.

10. Steering column (100) comprising a support assembly intended to be fixed to a vehicle chassis and a tube body mounted so as to be able to move in the support assembly to allow manual adjustment of the position of the tube body with respect to the support assembly, **characterised in that** it comprises a locking system according to any one of claims 1 to 9.

11. Method for adjusting the position of a steering column (100) of a vehicle with respect to the dashboard of said vehicle, the steering column (100) comprising a support assembly intended to be fixed to a vehicle chassis and a tube body mounted so as to be able to move in the support assembly, the method comprising the steps consisting of:
- unlocking the steering column (100) by activating an electric motor (4) in order to place the steering column in an unlocked state,
- manually adjusting the position of the tube body with respect to the support assembly,
- locking the steering column (100) by activating an electric motor (4) in order to place the steering column in a locked state,
- detecting the state of the steering column (100) and a step of sending an electrical signal representing the state of the steering column (100) and, according to the signal sent, instructions for activating the electric motor (4) are generated so as to place the column in the expected locked or unlocked state,
**characterised in that** it comprises a prior step of checking the existence of calibration parameters in memory in a unit (5) controlling the electric motor (4), and a step of detecting the non-execution of the activation instructions by the electric motor.

12. Method for adjusting the position of a steering column (100) of a vehicle with respect to the dashboard of said vehicle according to claim 11, **characterised in that**, if the existence of calibration parameters is not verified, a calibration step is proceeded with, consisting of determining and putting in memory in the control unit (5) specific data allowing passage from an unlocked state to a locked state, and vice versa, of the steering column (100).

13. Method for adjusting the position of a steering column (100) of a vehicle with respect to the dashboard of said vehicle according to claim 12, **characterised in that** the specific data comprise the number of turns in a given direction to be made by the electric motor (4) with respect to a reference position in order to reach a given position corresponding to the unlocked state and/or the locked state of the steering column (100).

14. Method for adjusting the position of a steering column (100) of a vehicle with respect to the dashboard of said vehicle according to claim 13, **characterised in that** the position of the electric motor (4) allowing unlocking of the steering column (100) is determined from a position of mechanical end-of-travel blocking of the electric motor (4) with respect to rotation in the direction corresponding to the unlocking of the steering column (100) and the number of turns made by the motor.

15. Method for adjusting the position of a steering column (100) of a vehicle with respect to the dashboard of said vehicle according to claim 13 or claim 14, **characterised in that** the electric motor (4) is stopped automatically when it reaches the position characterising the unlocked state and/or the locked state of the steering column (100).

16. Method for adjusting the position of a steering column (100) of a vehicle with respect to the dashboard of said vehicle according to any one of claims 11 to 15, **characterised in that** it comprises a step of automatic locking of the steering column (100) by the control unit (5) when the duration of maintaining the steering column (100) in the unlocked state exceeds a given limit threshold of duration of maintenance.
